# EUROPÄISCHE PATENTSCHRIFT

(11) **EP 2 297 815 B1**
(45) Veröffentlichungstag und Bekanntmachung des Hinweises auf die Patenterteilung: **04.10.2017**
(21) Anmeldenummer: 09749491.8
(22) Anmeldetag: 16.05.2009
(51) Int. Cl.: H01Q 1/12, H01Q 17/00, F03D 80/00

(54) **ROTORBLATT MIT DARIN INTEGRIERTEM RADARABSORBER FÜR EINE WINDKRAFTANLAGE**
ROTOR BLADE HAVING RADAR ABSORBER INTEGRATED THEREIN FOR A WIND POWER PLANT
PALE DE ROTOR D'ÉOLIENNE POURVUE D'UN ABSORBEUR RADAR INTÉGRÉ

(30) Priorität: 21.05.2008 DE 102008024644
(43) Veröffentlichungstag der Anmeldung: 23.03.2011
(73) Patentinhaber: Airbus Defence and Space GmbH, 85521 Ottobrunn (DE)
(72) Erfinder: BETTERMANN, Joachim, 27755 Delmenhorst (DE); FRYE, Andreas, 28816 Stuhr (DE)
(74) Vertreter: LKGLOBAL Lorenz & Kopf PartG mbB Patentanwälte
(86) Internationale Anmeldenummer: PCT/DE2009/000689
(87) Internationale Veröffentlichungsnummer: WO 2009/140949

(56) Entgegenhaltungen:
- EP-A1- 0 677 888
- EP-A2- 0 378 839
- EP-A2- 0 499 868
- DE-A1- 4 216 837
- DE-A1- 19 929 081
- DE-C1- 3 821 588
- Paul Saville: "Review of Radar Absorbing Materials" Defence R&D Canada - Atlantic Nr. TM 2005-003, 3. Januar 2005 (2005-01-03), XP002541734 Dartmouth, NS, CA Gefunden im Internet: URL:http://www.dtic.mil/cgi-bin/GetTRDoc?A D=ADA436262&Location=U2&doc=GetTRDoc.pdf> [gefunden am 2009-08-18]

## Beschreibung

Die Erfindung betrifft ein Rotorblatt aus faserverstärktem Kunststoff für eine Windkraftanlage. Zur Radarreflexionsminderung umfasst es einen in die Oberfläche integrierten passiven Radarabsorber.

Durch die Bewegung der Windenergierotoren bzw. der Rotorblätter wird für Radarsysteme der Flugsicherung, die als 2-D-Radarsysteme die Richtung und die Entfernung eines Flugobjektes zur Darstellung benötigen, ein bewegtes Objekt generiert. Die Rotorblätter als bewegte Objekte sind wie Luftfahrtzeuge durch eine ausreichend starke Reflexion mit Doppleranteilen gekennzeichnet. Dadurch werden zusätzliche Bewegtziele für das Radar erzeugt, die die Darstellung einer Flugspur eines tatsächlichen Flugobjektes behindern oder verfälschen.

Aus früheren Patentanmeldungen, z.B. der DE 199 29 081 A1, sind für die Radarreflexionsminderung Interferenzabsorber und Jaumannabsorberbauweisen bekannt, die eine besonders hochwertige Radarreflexionsminderung sicherstellen. Durch den sehr hohen Radarquerschnitt einer Windenergieanlage von mehr als 400 m² ist jedoch eine ausreichende Reflexionsdämpfung von mehr als 20 dB im Betriebfrequenzbereich von Radarsystemen zur Flugsicherung nicht unter allen Witterungsbedingungen gewährleistet. Allen bisherigen Lösungen und Herstellverfahren ist gemeinsam, dass möglichst alle reflexionsrelevanten Oberflächenbereiche eine reflexionsdämpfende Wirkung zeigen.

Die DE 39 01 012 A1 beschreibt das Rotorblatt eines Helikopters, wobei im Bereich seiner Vorderkante eine erosionsmindernde Verkleidung vorhanden ist, die aus einem elektromagnetische Strahlung aborbierenden Werkstoff besteht.

In Paul Saville: "Review of Radar Absorbing Materials" Defence R&D Canada-Atlantic Nr. TM 2005-003, 3. Januar 2005 (2005-01-03), Dartmouth, NS, CA Gefunden im Internet: URL: http://www.dtic.mil/cgi-bin/GetTRDoc? AD=ADA436262&Location=U2&doc=GetTRDoc.pdf (gefunden am 2009-08-18) werden verschieden Radar-Absorber beschrieben, unter anderem auch der Salisbury Screen und der Jaumann-Absorber.

Aufgabe der vorliegenden Erfindung ist es, durch den spezifischen Einsatz eines Radarabsorbers sicherzustellen, dass die Radaranlage die Windkraftanlage als solche erkennt und sie von einem tatsächlichen Flugobjekt unterscheiden kann.

Diese Aufgabe wird mit dem Gegenstand des Patentanspruch 1 gelöst. Vorteilhafte Ausführungen der Erfindung sind Gegenstand von Unteransprüchen.

Erfindungsgemäß umfasst der passive Radarabsorber, der in das faserverstärkte Kunststoffmaterial des Rotorblatts eingebettet ist, folgende Elemente:
- einer oberflächennahen Schicht, insbesondere gebildet aus einem Vlies, Gewebe, Gewirke oder eine Folie. Sie weist einen definierten elektrischen Flächenwiderstand von 100 bis 800 Ohm/Quadrat auf und befindet sich in einer Tiefe von 2 bis 5 mm unterhalb der Oberfläche des Rotorblatts;
- einer oberflächenfernen Schicht in einem Abstand zur oberflächennahen Schicht von 5 bis 16 mm. Die oberflächenferne Schicht kann ebenfalls als Vlies, Gewebe, Gewirke oder Folie ausgebildet sein. Bei der oberflächenfernen Schicht handelt es sich um eine technisch leitfähige Schicht mit einem definierten elektrischen Flächenwiderstand von maximal 50 Ohm/Quadrat.

Der integrierte Radarabsorber ist selektiv auf einen oder mehrere diskrete, d.h. voneinander getrennte Flächenbereiche des Rotorblatts beschränkt, ohne die gesamte Oberfläche des Rotorblatts abzudecken und ohne sich über die gesamte Länge des Rotorblatts zu erstrecken.

Gemäß der Erfindung befindet sich in mindestens einem der diskreten Flächenbereiche, an denen der Radarabsorber vorhanden ist, ein Abschnitt der Rotorblattkanten.

In einer Ausführung befindet sich in sämtlichen diskreten Flächenbereichen, an denen der Radarabsorber vorhanden ist, ein Abschnitt der Rotorblattkanten.

Diese erfindungsgemäße Absorberbauweise stellt in einem beschränkten Einfallswinkelbereich eine monostatische Reflexionsminderung sicher.

Da der Radarabsorber nicht sämtliche reflexionsrelevanten Oberflächenbereiche abdecken muss, ergeben sich Vorteile hinsichtlich Materialverbrauch und Gewicht.

Durch die selektive Anordnung des Radarabsorbers auf einem oder mehreren isolierten Oberflächenbereichen der Rotorblätter wird bei einer Drehung des Rotors eine definierte zeitabhängige Reflexionsintensität erzeugt, deren Charakteristik es der Signalverarbeitung einer Radaranlage ermöglich, dieses Objekt als Windenergieanlage zu identifizieren und auszufiltern. Die Spurbildung bzw. Verfolgung eines tatsächlichen Flugobjektes wird dadurch nicht beeinträchtigt.

Die Güte der Reflexionsdämpfung des Radarabsorbers und der Flächeneinsatz des Radarabsorbers im Hinblick auf die Formgebung, die Abmessungen des Rotorblattes und die Drehgeschwindigkeit des Rotors ermöglichen, eine definierte zeitliche Abhängigkeit der Reflexionsintensität in Richtung des Radaranlage sicherzustellen.

Für das faserverstärkte Kunststoffmaterial des Rotorblatts können die allgemein für diese Werkstoffe eingesetzten Ausgangsmaterialien verwendet werden (Harz- oder Polymermatrix; Kohlenstoff-, Glas- oder Aramidfasern).

Um für die oberflächennahe Schicht des Radarabsorbers den benötigten elektrischen Flächenwiderstand von 100 bis 800 Ohm/Quadrat einzustellen, können handelsübliche Fasermaterialien geringer elektrischer Leitfähigkeit entsprechend angepasst werden, z.B. durch Einweben metallischer Fäden oder durch Beschichtung des Fasermaterials mit leitfähigen Materialien.

Um für bestimmte Polarisationsrichtungen des Radarsystems wirksam zu sein, kann die oberflächennahe Schicht des Radarabsorbers vorteilhaft eine Vorzugsrichtung in der Fläche aufweisen, die eine richtungsabhängige Flächenleitfähigkeit bewirkt. Dies kann z.B. durch Unterschiede in der Faserverdichtung oder im Faserdurchmesser erzielt werden.

Die Erfindung wird anhand mehrerer Figuren näher erläutert. Es zeigen:
- Fig. 1a: die Darstellung der zeitlichen Abhängigkeit des Radarquerschnitts einer Windkraftanlage ohne erfindungsgemäßem Radarabsorber;
- Fig. 1b: die Darstellung des von einem Radar mit einer Umlaufzeit von 4,2 Sekunden erfassten dynamischen Radarquerschnitts einer Windkraftanlage ohne erfindungsgemäßem Radarabsorber;
- Fig. 2a: die Darstellung der zeitlichen Abhängigkeit des Radarquerschnitts einer Windkraftanlage mit erfindungsgemäßem Radarabsorber;
- Fig. 2b: die Darstellung des von einem Radar mit einer Umlaufzeit von 4,2 Sekunden erfassten dynamischen Radarquerschnitts einer Windkraftanlage mit erfindungsgemäßem Radarabsorber;
- Fig. 3a: Aufbau eines erfindungsgemäßen Radarabsorbers, integriert in das Rotorblatt der Windkraftanlage;
- Fig. 3b: Frequenzgang der Reflektionsminderung (in dB) des erfindungsgemäßen Radarabsorbers gemäß Fig. 3a.
- Fig. 4: zeigt ein erfindungsgemäßes Rotorblatt in drei Ansichten:
- Fig. 4a: 3D-Darstellung
- Fig. 4b: Schnittdarstellung
- Fig. 4c: Draufsicht.

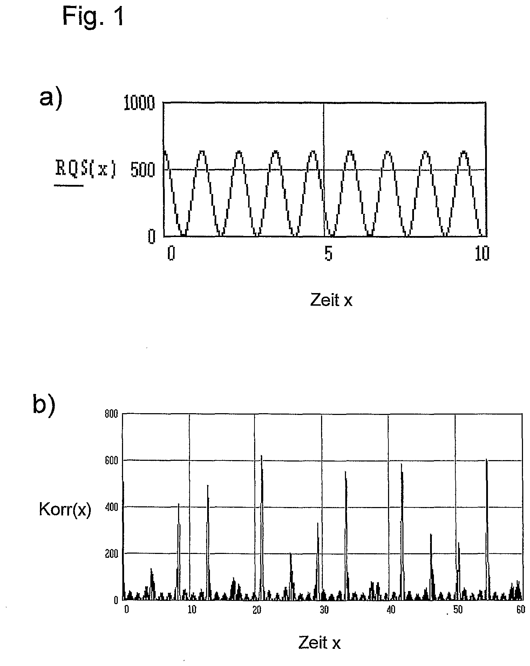

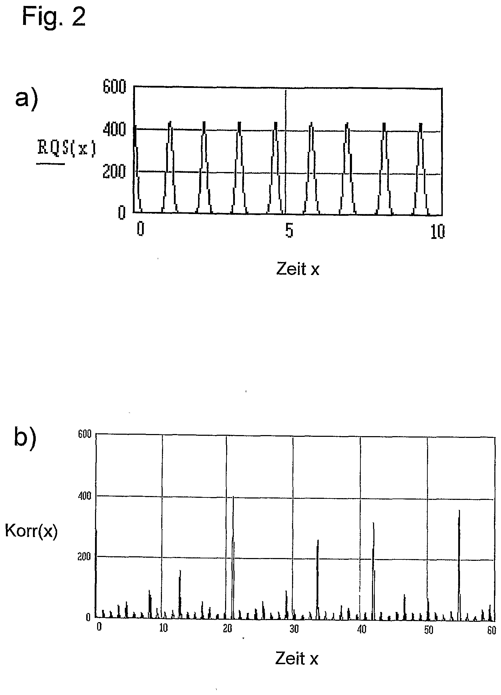

Anhand der Fig. 1 und 2 soll zunächst das Funktionsprinzip des erfindungsgemäßen Radarabsorbers erläutert werden.

Die Fig. 1a und 1b beziehen sich dabei auf einen Rotor ohne erfindungsgemäßen Radarabsorber. Fig. 1 a zeigt die zeitliche Abhängigkeit, mit der über einen Zeitraum von 10 Sekunden (bei Dauerbeleuchtung) eine Windkraftanlage von einem Radar detektiert wird. Man erkennt einen aufgrund der Rotorbewegung stark schwankenden zyklischen Verlauf mit breiten Maxima.

Fig. 1b zeigt eine Darstellung des vom Radar erfassten dynamischen Radarquerschnitts der Windkraftanlage über einen Zeitraum von 60 Sekunden in willkürlichen Einheiten (es wird zur Vereinfachung nur das oben zeigende Rotorblatt berücksichtigt unter der Annahme, dass das Rotorblatt entlang seiner Gesamtausdehnung störwirksame Reflexionsbeiträge liefert). Das Radar hat hier eine Umlaufzeit von 4,2 Sekunden, d.h. das Radar erfasst die Windkraftanlage nur in aufeinanderfolgenden Zeitpunkten mit einem zeitlichen Abstand entsprechend seiner Umlaufzeit. Demgemäß erkennt man aus der Fig. 1b ausgeprägte Radarreflexe im Abstand von jeweils ca. 4,2 Sekunden. Nimmt man einen Wert von 200 Einheiten auf der vertikalen Achse als Schwellwert, so fällt der Radarreflex der Windkraftanlage innerhalb von 60 Sekunden bei der dargestellten Messung nur 2 Mal aus (bei ca. 17s und 38s). Die Verfolgung und Spurbildung des Ziels durch das Radar wird durch solche einzelne Ausfälle des Radarechos jedoch nicht beeinträchtigt. Die Windkraftanlage wird vom Radar somit als Bewegtziel interpretiert.

Fig. 2a und Fig. 2b zeigt die entsprechenden Graphen für eine Windkraftanlage mit erfindungsgemäßen Rotorblättern, d.h. mit darin integriertem Radarabsorber. Ein Vergleich von Fig. 2a mit Fig. 1 a zeigt, dass
a) der absolute Wert des Radarquerschnitts bei Fig. 2a geringer ist als in Fig. 1 a
b) die Breite der Maxima bei Fig. 2a geringer ist als bei Fig. 1a.

Der Radarabsorber sorgt also nicht nur für eine Reflektionsdämpfung hinsichtlich der maximalen Stärke des detektierten Signals, sondern reduziert auch die Breite der Maxima wesentlich.

Diese Unterschiede führen bei den dynamischen Radarquerschnitten (Umlaufzeit des Radars jeweils 4,2 s) gemäß den Fig. 1b, und 2b dazu, dass
a) bei Fig. 2b die absoluten Werte der Radarreflexe in Fig. 2b gegenüber Fig. 1 b generelle vermindert sind,
b) bei Fig. 2b die Anzahl der Radarreflexe oberhalb von 200 Einheiten auf der vertikalen Achse geringer ist (durchschnittlich fällt mehr als jeder zweite Radarreflex der Windkraftanlage aus).

Durch den häufigen Ausfall der Radarreflexe der Windkraftanlage kann die Signalverarbeitung eines Radars erkennen, dass es sich hier nicht um ein echtes, sondern lediglich um ein Scheinziel handelt, das ausgefiltert werden muss.

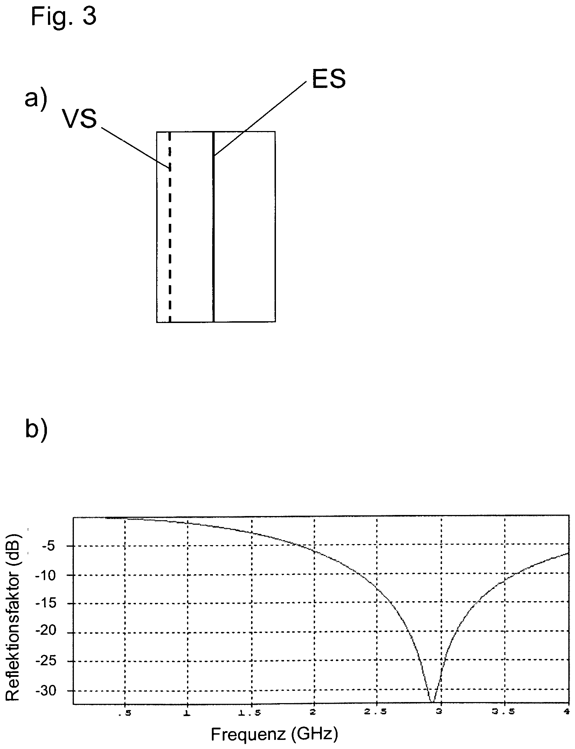

Fig.3a zeigt in Querschnittdarstellung eine Ausführung des erfindungsgemäßen passiven Radarabsorbers, der im Rotorblatt integriert ist. Die Oberfläche des Rotorblatts befindet sich auf der linken Seite. Sämtliche Elemente des Absorbers sind in das faserverstärkte Kunststoffmaterial des Rotorblatts eingebettet und von diesem umgeben.

In einem Abstand von 2 bis 5 mm unterhalb der Oberfläche des Rotorblatts befindet sich die oberflächennahe Schicht VS (z.B. ein Vlies, Gewebe, Gewirke oder eine Folie) mit einem Flächenwiderstand von 100 bis 800 Ohm/Quadrat. In einem Abstand von 5 bis 16 mm unterhalb der oberflächennahen Schicht VS ist die oberflächenferne Schicht ES (elektrisch leitfähige Grundfläche des Absorbers) vorhanden.

Fig. 3b zeigt für diesen Absorber den Frequenzgang des zugehörigen Reflektionskoeffizienten. Wie man daraus erkennt, ist der Absorber in dieser Ausführung für die Frequenz von 2,9 GHz optimiert.

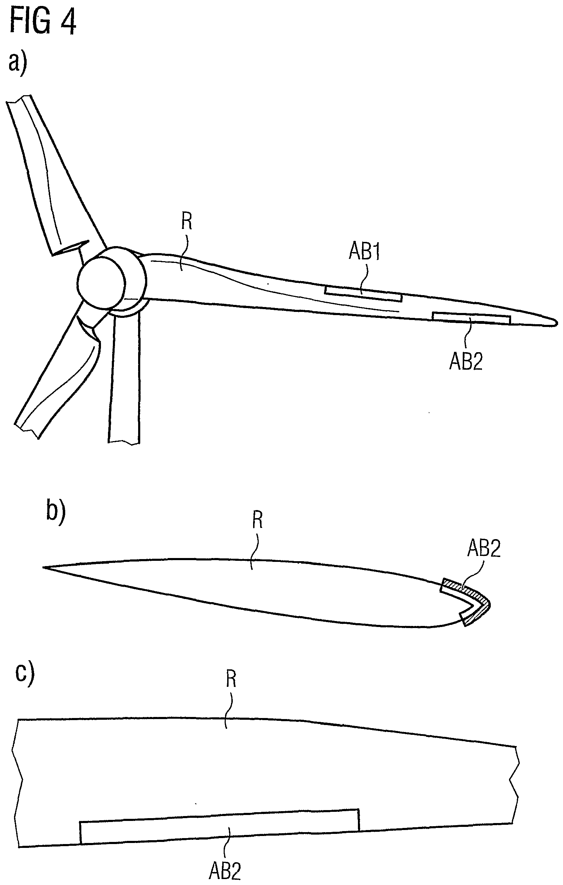

Die Fig. 4 zeigt ein erfindungsgemäßes Rotorblatt R in mehreren Ansichten, aus denen man insbesondere die Verteilung des Absorbers in der Fläche des Rotorblatts entnehmen kann.

Aus der 3-D-Darstellung der Fig. 4a erkennt man zwei diskrete Flächenbereiche AB1 ,AB2, an denen der Radarabsorber in das Rotorblatt R integriert ist. Beide Flächenbereiche liegen an den Rotorblattkanten, wobei einer AB2 an der Vorderkante liegt und der andere AB1 an der Hinterkante.

Wie man aus der Schnittdarstellung gemäß Fig. 4b erkennen kann, ist der Absorber AB2 über die Rotorkante gezogen und dabei unsymmetrisch auf Unter- und Oberseite des Rotorblatts verteilt (der Absorber AB1 in dem Flächenbereich an der Hinterkante ist in Fig. 4b nicht dargestellt). Eine Anordnung der Absorber AB1,AB2 in unmittelbarer Umgebung der Blattkante, wie generell aus den Fig. 4a-c hervorgeht, ist für die Erzeugung des erfindungsgemäßen Effekts besonders vorteilhaft. Eine Anordnung der Absorber ausschließlich an den Blattkanten wie in der Fig. 4 gezeigt, reicht für die Erzeugung des erfindungsgemäßen Effekts bereits aus. Die Blattkanten werden nicht in ihrer gesamten Länge mit dem Absorber versehen.

## Patentansprüche

1. Rotorblatt (R) aus faserverstärktem Kunststoff für eine Windkraftanlage, das einen in den faserverstärkten Kunststoff eingebetteten Radarabsorber aufweist, der **dadurch gekennzeichnet ist, dass**
- der integrierte Radarabsorber mehrere diskrete Flächenbereiche (AB1, AB2) des Rotorblatts (R) abdeckt, ohne die gesamte Oberfläche des Rotorblatts (R) abzudecken,
- sich die Flächenbereiche (AB1, AB2) nur über einen Teil der Länge des Rotorblatts (R) erstrecken, und sich in mindestens einem der diskreten Flächenbereiche (AB1, AB2) ein Abschnitt der Rotorblattkanten befindet,
- der integrierte Radarabsorber eine oberflächennahe Schicht (VS) mit einem definierten elektrischen Flächenwiderstand von 100 bis 800 Ohm/Quadrat aufweist, welche sich in einer Tiefe von 2 bis 5 mm unterhalb der Oberfläche befindet,
- der integrierte Radarabsorber eine oberflächenferne Schicht (ES) mit einem definierten elektrischen Flächenwiderstand von maximal 50 Ohm/Quadrat in einem Abstand zur oberflächennahen Schicht (VS) von 5 bis 16 mm aufweist.

2. Rotorblatt nach Anspruch 1, **dadurch gekennzeichnet, dass** sich in sämtlichen diskreten Flächenbereichen (AB1 ,AB2) jeweils ein Abschnitt der Rotorblattkanten befindet.

3. Rotorblatt nach einem der vorangehenden Ansprüche, **dadurch gekennzeichnet, dass** die oberflächennahe Schicht (VS) eine Vorzugsrichtung in der Fläche aufweist, die eine richtungsabhängige Flächenleitfähigkeit bewirkt.

4. Rotorblatt nach einem der vorangehenden Ansprüche, **dadurch gekennzeichnet, dass** die oberflächennahe Schicht (VS) aus einem Vlies, Gewebe, Gewirke oder einer Folie besteht.

5. Rotorblatt nach einem der vorangehenden Ansprüche, **dadurch gekennzeichnet, dass** die oberflächenferne Schicht (ES) aus einem Vlies, Gewebe, Gewirke oder einer Folie besteht.

## Claims

1. A rotor blade (R) of fiber-reinforced plastic for a wind power plant, that comprises a radar absorber embedded in the fiber-reinforced plastic, **characterized in that**
- the integrated radar absorber covers several discrete surface sections (AB 1, AB2) of the rotor blade (R) without covering the entire surface of the rotor blade (R),
- the surface sections (AB1, AB2) extend only along a part of the length of the rotor blade (R), and a section of the rotor blade edges is located in at least one of the discrete surface sections (AB1, AB2),
- the integrated radar absorber comprises a layer (VS) close to the surface with a defined electric sheet resistivity of 100 to 800 ohm/square, which is located 2 to 5 mm below the surface,
- the integrated radar absorber comprises a layer (ES) far removed from the surface with a defined electric sheet resistivity of a maximum of 50 ohm/square in a distance of 5 to 16 mm to the layer (VS) close to the surface.

2. The rotor blade according to claim 1, **characterized in that** in each of the discrete surface sections (AB1, AB2) one section of the rotor blade edges is located respectively.

3. The rotor blade according to any one of the preceding claims, **characterized in that** the layer (VS) close to the surface comprises a preferred orientation in the surface, which causes an orientation-dependent surface conductivity.

4. The rotor blade according to any one of the preceding claims, **characterized in that** the layer (VS) close to the surface consists of a fibrous web, cloth, knitted fabric or a film.

5. The rotor blade according to any one of the preceding claims, **characterized in that** the layer (ES) far removed from the surface consists of a fibrous web, cloth, knitted fabric or a film.

## Revendications

1. Pale de rotor (R) en matière plastique renforcée par fibre pour une éolienne, présentant un absorbeur radar intégré dans la matière plastique renforcée par fibre, lequel est **caractérisé en ce que**
- l'absorbeur radar intégré recouvre plusieurs zones de surface (AB1, AB2) discrètes de la pale de rotor (R) sans recouvrir la surface totale de la pale de rotor (R),
- les zones de surface (AB1, AB2) ne s'étendent que sur une partie de la longueur de la pale de rotors (R), et **en ce qu'**une section des bords de pale de rotor se trouve dans au moins une des zones de surface (AB1, AB2) discrètes,
- l'absorbeur radar intégré présente une couche (VS) proche de la surface, ayant une résistance de surface électrique définie de 100 à 800 ohms/carré, laquelle couche se trouve à une profondeur de 2 à 5 mm en dessous de la surface,
- l'absorbeur radar intégré présente une couche (ES) éloignée de la surface, ayant une résistance de surface électrique définie de maximum 50 ohms/carré, qui se trouve à une profondeur de 5 à 16 mm en dessous la couche (VS) proche de la surface.

2. Pale de rotor selon la revendication 1, **caractérisée en ce qu'**une section des bords de la pale de rotor se trouve respectivement dans toutes les zones de surface (AB1, AB2) discrètes.

3. Pale de rotor selon l'une quelconque des revendications précédentes, **caractérisée en ce que** la couche (VS) proche de la surface présente une direction préférentielle dans la surface, laquelle cause une conductivité de surface dépendant de la direction.

4. Pale de rotor selon l'une quelconque des revendications précédentes, **caractérisée en ce que** la couche (VS) proche de la surface est constituée d'une matière non tissée, de tissu, de tricot ou d'un film.

5. Pale de rotor selon l'une quelconque des revendications précédentes, **caractérisée en ce que** la couche (ES) éloignée de la surface est constituée d'une matière non tissée, de tissu, de tricot ou d'un film.
